# EUROPEAN PATENT APPLICATION

(11) **EP 4 722 785 A1**
(43) Date of publication of application: **08.04.2026**
(21) Application number: 23938121.3
(22) Date of filing: 02.08.2023
(51) Int. Cl.: G02B 27/01, G02B 13/00

(54) **PROJECTION LENS, VEHICLE-MOUNTED HUD, AND VEHICLE**

(30) Priority: 25.05.2023 CN 202310599495
(71) Applicant: Goertek Optical Technology Co., Ltd., Weifang, Shandong 261031 (CN)
(72) Inventor: ZHENG, Xiao, Weifang, Shandong 261031 (CN); DAN, Kun, Weifang, Shandong 261031 (CN); ZHANG, Tingrui, Weifang, Shandong 261031 (CN)
(74) Representative: Rau, Schneck & Hübner Patentanwälte Rechtsanwälte PartGmbB
(86) International application number: PCT/CN2023/110821
(87) International publication number: WO 2024/239452

(57) **Abstract**

Embodiments of the present disclosure provide a projection lens, a vehicle-mounted HUD, and a vehicle; wherein the projection lens includes, from an object side toward an image side along the same optical axis, a front lens group, a rear lens group, and a stop; wherein the stop is located between the front lens group and the rear lens group; the front lens group includes at least a first lens and a second lens, and the second lens is located between the first lens and the stop; wherein the first lens has a negative optical power, and light rays exiting the first lens raise their height upon incidence on the second lens. The projection lens in the embodiments of the present disclosure has good lens performance. (FIG. 1)

## Description

### TECHNICAL FIELD

Embodiments of the present disclosure relate to the technical field of optical imaging, and particularly, to a projection lens, a vehicle-mounted HUD, and a vehicle.

### BACKGROUND

A Head-Up Display (HUD) system projects a virtual image from an image source several meters in front of the vehicle, displaying various kinds of information such as vehicle speed and fuel gauge, allowing the driver to keep eyes on the road without looking down at the instrument panel, thus greatly reducing the driving accident rate.

An important component within a HUD is the image source of the HUD, which is typically constituted by a TFT system or a projection system. Here, the projection system is further divided into DLP projection and LCOS projection. Depending on the type of the image source, the projection lenses also vary; that is, existing optical designs of the projection lenses cannot adapt to different types of image sources, resulting in poor versatility thereof. Moreover, the usage environment of accessories within the vehicle is relatively harsh. If the optical performance of the lenses is poor, the imaging effect will be compromised, leading to a poor user experience.

### SUMMARY

An objective of the present disclosure is to provide a new technical solution for a projection lens, a vehicle-mounted HUD, and a vehicle, which solves the problems of poor optical performance and inability to adapt to different types of image sources of existing projection lenses.

In a first aspect, embodiments of the present disclosure provide a projection lens. The projection lens comprises, from an object side toward an image side along the same optical axis, a front lens group, a rear lens group, and a stop; wherein the stop is located between the front lens group and the rear lens group; the front lens group comprises at least a first lens and a second lens, and the second lens is located between the first lens and the stop; wherein the first lens has a negative optical power, and light rays exiting the first lens raise their height upon incidence on the second lens.

Optionally, the first lens comprises a first surface and a second surface, the second surface is close to the second lens, and a ratio of a radius of curvature R₁₂ of the second surface to an air gap A between the first lens and the second lens is: 1.5 < R₁₂/A < 3.3.

Optionally, the second lens comprises a third surface and a fourth surface, a second surface of the first lens and the third surface of the second lens are adjacent and spaced apart; wherein the second surface is a concave surface, and a radius of curvature R₁₂ of the second surface is -20mm to -28mm.

Optionally, when the second surface of the first lens is a concave surface, an FOV value of the projection lens can be increased by 4° to 8°.

Optionally, an effective focal length of the projection lens is 17mm to 28mm.

Optionally, a clear aperture of the third surface is greater than that of the second surface.

Optionally, the front lens group further comprises a third lens, and the third lens is located between the second lens and the stop; and
the third lens is a meniscus lens, a focal length of the third lens is F₃, a radius of curvature of the third lens is R₃, an aperture of the third lens is L₃, which satisfy: F₃ > 5R₃, L₃/R₃ > 1.2.

Optionally, the third lens comprises a fifth surface and a sixth surface, the fifth surface faces away from the stop, and the sixth surface is close to the stop; and
wherein the fifth surface is a convex surface, the sixth surface is a concave surface, and the center of curvature of the sixth surface is close to a center of the stop.

Optionally, the front lens group comprises a first lens group, a second lens group, and a third lens group; and
the first lens is located in the first lens group, the second lens is located in the second lens group, and the third lens is located in the third lens group; an effective focal length of the first lens group is -28mm to -45mm, an effective focal length of the second lens group is 25mm to 32mm, and an effective focal length of the third lens group is -50mm to -65mm.

Optionally, the rear lens group comprises a fourth lens group, a fifth lens group, and a sixth lens group arranged in sequence; and
an effective focal length of the fourth lens group is -19mm to -35mm, an effective focal length of the fifth lens group is 25mm to 50mm, and an effective focal length of the sixth lens group is 16mm to 30mm.

Optionally, the fourth lens group comprises a fourth lens and a fifth lens, which are cemented to each other to form a cemented lens group, and the center of curvature of a cemented surface between the fourth lens and the fifth lens is located on one side of the stop.

Optionally, the fifth lens group comprises at least a sixth lens, and a surface of the sixth lens away from the stop is a convex surface;
the sixth lens group comprises a seventh lens and an eighth lens.

Optionally, a focal length F_{front} of the front lens group is: F_{front} > 80mm; a focal length Fᵣₑₐᵣ of the rear lens group is: 12mm ≤ Fᵣₑₐᵣ ≤ 18mm.

Optionally, the projection lens further comprises a prism and an image generator, which are sequentially located on a side of the rear lens group away from the stop, with a protective glass provided between the prism and the image generator.

In a second aspect, embodiments of the present disclosure provide a vehicle-mounted HUD. The vehicle-mounted HUD comprises:
the projection lens according to the first aspect.

The beneficial effects of the present disclosure are as follows:

The embodiments of the present disclosure provide a projection lens, which can be applied to, for example, a vehicle-mounted HUD and other vehicle-mounted projection fields. In the projection lens provided by the embodiments of the present disclosure, when light rays pass through the first lens and enter the second lens, the height of the light rays on the surface of the second lens is raised. This design can better correct aberrations, improve the clarity of the projected image, and enable the entire projection lens to have excellent projection imaging performance; furthermore, the projection lens provided by the embodiments of the present disclosure can adapt to multiple types of image sources, and the projection imaging effects are all excellent.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.
FIG. 1 is a schematic structural diagram of a projection lens provided by an embodiment of the present disclosure;
FIG. 2 is a light path diagram of the projection lens provided by Embodiment 1 of the present disclosure;
FIG. 3 is a field curvature and distortion diagram of the projection lens provided by the Embodiment 1 of the present disclosure;
FIG. 4 is an MTF curve diagram of the projection lens provided by Embodiment 1 of the present disclosure;
FIG. 5 is a defocus MTF diagram of the projection lens provided by Embodiment 1 of the present disclosure;
FIG. 6 is a depth of focus diagram of the projection lens provided by Embodiment 1 of the present disclosure;
FIG. 7 is a lateral chromatic aberration diagram of the projection lens provided by Embodiment 1 of the present disclosure;
FIG. 8 is a light path diagram of the projection lens provided by Embodiment 2 of the present disclosure;
FIG. 9 is a field curvature and distortion diagram of the projection lens provided by Embodiment 2 of the present disclosure;
FIG. 10 is an MTF curve diagram of the projection lens provided by Embodiment 2 of the present disclosure;
FIG. 11 is a defocus MTF diagram of the projection lens provided by Embodiment 2 of the present disclosure;
FIG. 12 is a depth of focus diagram of the projection lens provided by Embodiment 2 of the present disclosure;
FIG. 13 is a lateral chromatic aberration diagram of the projection lens provided by Embodiment 2 of the present disclosure.

### Description of reference signs:

1. first lens; 101. first surface; 102. second surface; 2. second lens; 201. third surface; 202. fourth surface; 3. third lens; 301. fifth surface; 302. sixth surface; 4. fourth lens; 5. fifth lens; 6. sixth lens; 7. seventh lens; 8. eighth lens; 9. stop; 10. prism; 11. protective glass; 12. image generator.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed here, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

According to one aspect of the embodiments of the present disclosure, a projection lens is provided, which can be applied to a vehicle-mounted projection device, such as a vehicle-mounted HUD, and other vehicle-mounted projection fields. The projection lens provided by the embodiments of the present disclosure exhibits good optical performance and is well-suited for the evolving demands of vehicle-mounted projection devices.

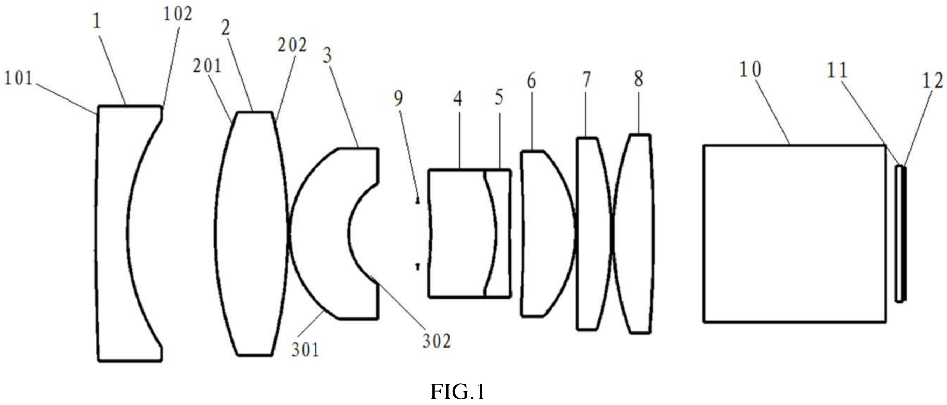

In the projection lens provided by the embodiments of the present disclosure, referring to FIG. 1, the projection lens includes, from an object side toward an image side along the same optical axis, a front lens group, a rear lens group, and a stop 9; wherein the stop 9 is located between the front lens group and the rear lens group.

The front lens group includes at least a first lens 1 and a second lens 2. The first lens 1 is located on a side away from the stop 9, and the second lens 2 is located on a side close to the stop 9; wherein the first lens 1 has a negative optical power, and light rays exiting the first lens 1 raise their height upon incidence on the second lens 2.

The projection lens provided by the above embodiments of the present disclosure is divided into the front lens group and the rear lens group by the stop 9 as a boundary. Here, the front lens group includes, for example, the above first lens 1 and second lens 2; the first lens 1 is located on a side close to the object side, and the second lens 2 is disposed closer to the stop 9 than the first lens 1. It should be noted that the front lens group is not limited to including the above two lenses, and may also include other lenses, which is not limited in the present disclosure.

In the technical solution of the embodiments of the present disclosure, the first lens 1 is designed as a negative lens, that is, it has a certain negative optical power. This design is considered because it can cause the light rays to diverge after exiting the first lens 1, thereby raising their height upon incidence on the second lens 2. In this way, it is possible to correct aberrations in the process of the projection imaging, and to increase the FOV value of the optical module appropriately, which can enhance the user's immersive experience.

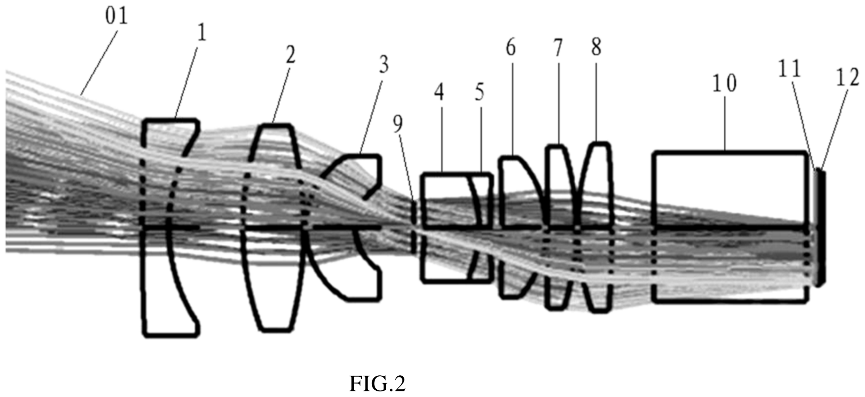

Specifically, referring to the light path diagram shown in FIG. 2, when the light rays exiting the first lens 1 and then enter the second lens 2, the variation trend of the light rays in height is clearly observed: the height of the light rays at the second surface 102 of the first lens 1 (the surface close to the second lens 2) is lower than that at the third surface 201 of the second lens 2 (the surface close to the first lens 1). That is, as mentioned in the above embodiments, the light rays exiting the first lens 1 raises its height upon incidence on the second lens 2. This design can better correct aberrations and thus improve the clarity of the projected image.

According to the projection lens provided by the embodiments of the present disclosure, it is suitable for fields such as vehicle-mounted applications and consumer products. The projection lens provided by the embodiments of the present disclosure is not only applicable to a DLP system but also to a LCOS system.

Specifically, the LCOS system has polarization characteristics, and only light with matching polarization can pass through it, which has a relatively significant impact on light efficiency. The DLP system is a digital light processing system based on a spatial light modulator DMD, wherein each pixel is equivalent to a small mirror, and by instantaneously orienting the small mirror to one direction, light is directed through the lens to form a bright spot at the projection image plane; when the small mirror flips to the opposite direction, the light is projected in another direction such that it completely miss the lens, forming a dark spot on the image plane. The frequency at which light passes through the lens represents the grayscale of that pixel. Since pixel reflection has no requirement for polarization characteristics, the light efficiency of DLP systems is generally higher than that of TFT systems and LCOS systems. The projection lens provided by the embodiments of the present disclosure is applicable to both DLP systems and LCOS systems, and thus demonstrates good versatility.

The embodiments of the present disclosure provide a projection lens, which can be applied to, for example, vehicle-mounted HUDs and other vehicle-mounted projection fields. In the projection lens provided by the embodiments of the present disclosure, when light rays pass through the first lens 1 and enter the second lens 2, the height of the light rays on the surface of the second lens 2 (specifically, the surface close to the first lens 1) is raised. This design can better correct aberrations, improve the clarity of the projected image, and enable the entire projection lens to have excellent projection imaging performance. Furthermore, the projection lens provided by the embodiments of the present disclosure can adapt to multiple types of image sources, and the projection imaging effects are all excellent.

It should be noted that, in the above embodiments of the present disclosure, the image side refers to the side where the light source of the projected image (or projection screen) is located during the projection process, such as the image generator 12 (i.e., the image source, for example, a display screen) shown on the far right in FIG. 1 and FIG. 2. The object side refers to the side where the projected image is formed on the projection surface, such as the far left in FIG. 1 and FIG. 2.

Here, the stop 9 is, for example, an aperture stop. The stop 9 can be used to limit the diameter of the projected light rays passing through it, adjust the luminous flux exiting the projection lens, and simultaneously reduce stray light interference caused by reflection from other lenses, thereby making the imaging of the projected light rays clearer.

For example, the aperture of the stop 9 is a fixed value.

Of course, in order to flexibly adjust the clarity of the projection imaging and enable the formed projection lens to better adapt to switching between high and low resolutions, the stop 9 can also be configured to allow adjustment of the aperture size.

According to the projection lens provided by the embodiments of the present disclosure, projection light rays can be emitted from the image generator 12 (i.e., the image source, for example, a display screen) shown on the right side in FIG. 1, travel from the image side toward the object side, sequentially pass through the rear lens group, the stop 9, and the front lens group, and are finally output to the projection surface on the object side, thereby presenting a projection screen.

In the projection lens provided by the embodiments of the present disclosure, the above image generator 12 may be disposed on a side of the rear lens group away from the stop 9 and can emit light rays for projection.

In some examples of the present disclosure, the first lens 1 includes a first surface 101 and a second surface 102, the second surface 102 is close to the second lens 2, and a ratio of a radius of curvature R₁₂ of the second surface 102 to an air gap A between the first lens 1 and the second lens 2 is: 1.5 < R₁₂/A < 3.3.

In the projection lens provided by the above embodiments of the present disclosure, within the front lens group, the first lens 1 is located on a side close to the human eye 01, and the second lens 2 is located on a side close to the stop 9, and a certain air gap A exists between the first lens 1 and the second lens 2. By controlling the ratio of the radius of curvature R₁₂ of the second surface 102 of the first lens 1 to the above air gap A within the range of 1.5 to 3.3 as in the above embodiments, it is possible to balance imaging quality while ensuring a small volume of the projection lens, and to appropriately increase the field of view angle of the optical module.

In some examples of the present disclosure, referring to FIG. 1, the second lens 2 includes a third surface 201 and a fourth surface 202, the second surface 102 of the first lens 1 and the third surface 201 of the second lens 2 are adjacent and spaced apart; wherein the second surface 102 is a concave surface, and the radius of curvature R₁₂ of the second surface 102 is -20mm to -28mm.

That is to say, in the projection lens provided by the embodiments of the present disclosure, designing the first lens 1 located on the object side as a negative lens causes light rays passing through this lens to diverge. A relatively preferable approach is to design the second surface 102 of the first lens 1 as a concave surface with a large curvature (highly concave) to ensure divergence of the light rays.

However, excessive divergence of the light may require a larger clear aperture for the subsequent second lens 2, which in turn could increase the physical size of the lens. This would adversely affect the volume and weight of the optical module, necessitating careful control. By controlling the radius of curvature R₁₂ of the second surface 102 within the above range of -20mm to -28mm, it is possible to ensure the quality of projection imaging while also preventing the clear aperture value of the second lens 2 from becoming too large.

In the projection lens provided by the above embodiments of the present disclosure, because the height of the light rays exiting the first lens 1 and entering the second lens 2 is raised, it is possible to increase the field of view angle of the projection lens to a certain extent, i.e., the FOV value.

Optionally, when the second surface 102 of the first lens 1 is a concave surface, the FOV value of the projection lens can be increased by 4° to 8°.

That is to say, the projection lens provided by the embodiments of the present disclosure can have a larger field of view angle, which can provide users with a better visual experience. According to the projection lens provided by the above embodiments of the present disclosure, the effective focal length of the projection lens is 17mm to 28mm.

The projection lens provided by the embodiments of the present disclosure features a straightforward optical structure design. The effective focal length of the entire projection lens is designed, for example, to be 17mm to 28mm, which enables the projection light rays to achieve focusing at a proper distance, and may improve the quality of the projected image.

Furthermore, the above range of effective focal length makes the formed projection lens suitable for vehicles, allowing it to project a clear image at a suitable distance in front of the vehicle (e.g., on the windshield). The image can display various kinds of information such as the vehicle speed and fuel gauge, such that the driver can understand various vehicle information through a clear virtual image without looking down at the instrument panel.

It should be noted that the effective range of the projection lens provided by the embodiments of the present disclosure can form a large-sized and clear projection screen under the premise of ensuring projection imaging quality.

According to the projection lens provided by the embodiments of the present disclosure, referring to FIG. 1, the first lens 1 includes a first surface 101 and a second surface 102, the second lens 2 includes a third surface 201 and a fourth surface 202, the second surface 102 and the third surface 201 are adjacent and spaced apart, and the clear aperture of the third surface 201 is greater than that of the second surface 102.

It is emphasized that, in the projection lens, the clear aperture of the third surface 201 of the second lens 2 and the clear aperture of the second surface 102 of the first lens 1 refer to the portions participating in optical imaging, not the physical dimensions of the entire lens. Optionally, a ratio of the clear aperture A of the third surface 201 to the clear aperture B of the second surface 102 is: 1 < A/B ≤ 1.3.

In the projection lens provided by the embodiments of the present disclosure, the light rays exiting the first lens 1 are raised upon incidence on the second lens 2. In order to allow as much light rays as possible to enter the second lens 2 and improve light efficiency, the second lens 2 is made somewhat larger than the first lens 1. In particular, the optical aperture B of the third surface 201 of the second lens 2 is greater than the optical aperture A of the second surface 102 of the first lens 1. For example, the ratio of their apertures can be controlled within the above range. This not only reasonably controls the sizes of the first lens 1 and the second lens 2, thereby controlling production costs, but also helps improve the quality of the projected image.

For example, the ratio of the optical aperture A of the third surface 201 to the optical aperture B of the second surface 102 is: 1.1, 1.2, or 1.3.

In some examples of the present disclosure, referring to FIG. 1, the front lens group further includes a third lens 3, and the third lens 3 is located between the second lens 2 and the stop 9. The third lens 3 is a meniscus lens, a focal length of the third lens 3 is F₃, a radius of curvature of the third lens 3 is R₃, an aperture of the third lens 3 is L₃, which satisfy: F₃ > 5R₃, L₃/R₃ > 1.2.

For example, referring to FIG. 1, in the front lens group, the surface shape of the third lens 3 located on the left side of the stop 9 is a convex-concave shape. At this time, the optical power of the third lens 3 can be positive or negative, which is not limited in the embodiments of the present disclosure.

According to the above example, the surface shape of the third lens 3 is convex-concave, with the convex surface being relatively convex and the concave surface being designed relatively concave, as shown in the third lens 3 in FIG. 1. This design is beneficial for improving the quality of projection imaging.

Optionally, the third lens 3 includes a fifth surface 301 and a sixth surface 302, the fifth surface 301 faces away from the stop 9, and the sixth surface 302 is close to the stop 9; wherein the fifth surface 301 is a convex surface, the sixth surface 302 is a concave surface, and the center of curvature of the sixth surface 302 is close to the center of the stop 9.

In the projection lens, the surface of the third lens 3 close to the stop 9 (i.e., the sixth surface 302) is designed as a concave surface with a large curvature (highly concave), and its surface away from the stop 9 (i.e., the fifth surface 301) is designed as a convex surface with a large curvature (highly convex). Simultaneously, the present disclosure also designs its concave surface close to the stop 9 (i.e., the sixth surface 302) to be located near the center of the stop 9. At this time, the third lens 3is equivalent to an aplanatic lens.

Introducing an aplanatic lens into the entire projection lens effectively solves the problem of residual aberrations within the lens. Specifically, when the aplanatic lens slightly deviates from the aplanatic point position, it is possible to produce aberrations similar in magnitude but opposite in sign to those of the original projection lens, thereby canceling out the aberrations of the original projection lens and significantly reducing residual aberrations. This is beneficial for improving the optical performance of the projection lens.

In some examples of the present disclosure, the projection lens includes a front lens group, which includes a first lens group, a second lens group, and a third lens group; referring to FIG. 1, the first lens 1 is located in the first lens group, the second lens 2 is located in the second lens group, and the third lens 3 is located in the third lens group.

Here, the front lens group includes, for example, the above three lens groups, and the actual number of lenses in each lens group can be flexibly set according to requirements, which is not limited in the embodiments of the present disclosure.

For example, the second lens group may include one lens element, i.e., only the second lens 2. This is the basic framework of the projection lens and does not increase production costs.

As another example, the second lens group may include two or more lens elements. Such a design can improve the performance of the entire projection lens.

It should be noted that the first lens group and the third lens group include, but are not limited to, only one lens element; the specific number can be adjusted according to the quality requirements for projection imaging, etc. As the number of lens elements in each lens group increases, it is possible to improve the projection imaging quality appropriately.

Optionally, an effective focal length of the first lens group is -28mm to -45mm, an effective focal length of the second lens group is 25mm to 32mm, and an effective focal length of the third lens group is -50mm to -65mm.

Optionally, the projection lens further includes a rear lens group, which includes a fourth lens group, a fifth lens group, and a sixth lens group arranged in sequence; an effective focal length of the fourth lens group is -19mm to -35mm, an effective focal length of the fifth lens group is 25mm to 50mm, and an effective focal length of the sixth lens group is 16mm to 30mm.

By controlling the effective focal lengths of the various lens groups in the front lens group and the rear lens group, it is beneficial to control the effective focal length of the entire projection lens, enabling the projection light rays to achieve focus at a proper distance, thereby helping to improve the quality of the projected image.

In some examples of the present disclosure, referring to FIG. 1, the fourth lens group includes a fourth lens 4 and a fifth lens 5, which are cemented to each other to form a cemented lens group, and the center of curvature of a cemented surface between the fourth lens 4 and the fifth lens 5 is located on one side of the stop 9.

In the projection lens provided by the embodiments of the present disclosure, please continue to refer to FIG. 1, the fourth lens group is disposed on the right side of the stop 9, and the fourth lens group includes, for example, two lens elements, namely the above fourth lens 4 and fifth lens 5. The fourth lens 4 and the fifth lens 5 are cemented to each other. This design helps reduce chromatic aberration, thereby improving the optical performance of the projection lens.

Specifically, the fourth lens group includes the fourth lens 4 and the fifth lens 5 cemented together. The cemented surface between them is, for example, a curved surface, and the center of curvature of the cemented surface can be designed to be located on one side of the stop. This design can also eliminate aberrations to improve the quality of the final projection imaging.

Specifically, the fourth lens 4 is close to the stop 9, and the fifth lens 5 is farther away from the stop 9 than the fourth lens 4. The center of curvature of the surface of the fourth lens 4 close to the stop 9 can be on the side of the stop 9 or on the side of the cemented surface between the fourth lens 4 and the fifth lens 5, but this surface is relatively flat, and its aperture is slightly larger than the clear aperture of the stop 9. Furthermore, the distance between the stop 9 and the fourth lens 4 is relatively short. The center of curvature of the surface of the fifth lens 5 away from the stop 9 can be on the left side or the right side.

In some examples of the present disclosure, referring to FIG. 1, the fifth lens group includes at least a sixth lens 6, and a surface of the sixth lens 6 away from the stop 9 is a convex surface. The sixth lens group includes a seventh lens 7 and an eighth lens 8.

Here, the fifth lens group includes at least the sixth lens 6. The surface of the sixth lens 6 away from the stop 9 is relatively convex, while the surface of the sixth lens 6 close to the stop 9 can be convex or concave, and its radius of curvature is designed to be relatively large, as shown in FIG. 1.

Here, the sixth lens group includes the seventh lens 7 and the eighth lens 8. The focal lengths of these two lenses are both positive and relatively large, and the curvature radii are relatively large. This is conducive to achieving good projection imaging effects.

Optionally, the optical performance of the projection lens can be improved by increasing the number of lens elements in the sixth lens group.

It should be noted that in the optical path structure of the entire projection lens, the selection of surface profiles for the lenses in the front lens group can further ensure effective divergence of light rays by the front lens group. In the rear lens group, the surface profiles of the various lenses in the fourth lens group, the fifth lens group, and the sixth lens group are properly designed so as to enable the converging projection light in the rear lens group to achieve the effect of proper distance projection. In this way, the cooperation between the front lens group and the rear lens group enables a clear image to be projected onto the projection surface.

According to the projection lens provided by the embodiments of the present disclosure, it may include eight lens elements, namely the first lens 1, the second lens 2, the third lens 3, the fourth lens 4, the fifth lens 5, the sixth lens 6, the seventh lens 7, and the eighth lens 8 shown in FIG. 1. These eight lens elements form the basic optical framework of the entire projection lens. That is to say, the projection lens provided by the embodiments of the present disclosure can be composed of eight lens elements.

Here, the various lenses in the front lens group and the rear lens group can be, for example, glass lens elements. Furthermore, all lenses can be, for example, spherical glass lens elements.

Due to the cost advantage of glass material, this can reduce the manufacturing cost of the projection lens. At the same time, with the characteristic of high temperature resistance of the glass material, the glass material has low thermal distortion rate and high stability. Therefore, the various lenses in the optical path can be designed as glass material. In particular, the lenses in the rear lens group close to the image source are set as glass material, thereby avoiding the impact of high temperature on the projection lens.

Of course, those skilled in the art can reasonably select the material of each lens in the projection lens according to specific needs, which is not limited in the embodiments of the present disclosure.

Optionally, the optical power of the first lens 1 is negative. The optical power of the second lens 2 is positive.

Specifically, the first lens 1 is a meniscus lens with negative optical power, which is capable of causing light rays exiting the first lens 1 to diverge.

Specifically, the second lens 2 is a biconvex lens with positive optical power, which is capable of converging light rays.

In some examples of the present disclosure, a focal length F_{front} of the front lens group is: F_{front} > 80mm, and a focal length Fᵣₑₐᵣ of the rear lens group is: 12mm ≤ Fᵣₑₐᵣ ≤ 18mm.

This can ensure a clear projected image while maintaining the compact volume of the projection lens.

In some examples of the present disclosure, referring to FIG. 1, the projection lens further includes a prism 10 and an image generator 12. The prism 10 and the image generator 12 are sequentially located on a side of the rear lens group away from the stop 9. A protective glass 11 is provided between the prism 10 and the image generator 12.

The image generator 12 includes, for example, an image source composed of DLP or LCOS. That is to say, the projection lens is not only applicable to DLP systems but also to LCOS systems, demonstrating strong versatility.

The projection lens provided by the present disclosure is further introduced below through Embodiment 1 and Embodiment 2.

### Embodiment 1

Referring to FIG. 2, the projection lens includes, from the object side toward the image side along the same optical axis, a front lens group, a rear lens group, and a stop; wherein the stop is located between the front lens group and the rear lens group.

The front lens group includes a first lens group, a second lens group, and a third lens group arranged in sequence. The first lens group has a first lens 1. The second lens group has a second lens 2, and the optical power of the second lens 2 is positive. The light rays exiting the second surface 102 raise their height upon incidence on the third surface 201.

The optical power of the first lens 1 is negative, for example, it can be set in the range of -0.04 to -0.02. The first lens 1 includes a first surface 101 and a second surface 102. The second surface 102 is close to the second lens 2, and the ratio of the radius of curvature R₁₂ of the second surface 102 to the air gap A between the first lens 1 and the second lens 2 is: 1.5 < R₁₂/A < 3.3.

The second lens 2 includes a third surface 201 and a fourth surface 202. The second surface 102 and the third surface 201 are adjacent and spaced apart. The clear aperture of the third surface 201 is greater than the clear aperture of the second surface 102.

The third lens group has a third lens 3. The third lens 3 is a meniscus lens and includes a fifth surface 301 and a sixth surface 302. The fifth surface 301 faces away from the stop 9, and the sixth surface 302 is close to the stop 9. The fifth surface 301 is a convex surface, the sixth surface 302 is a concave surface, and the center of curvature of the sixth surface 302 is close to the center of the stop 9. The focal length of the third lens 3 is F₃, the radius of curvature of the third lens 3 is R₃, and the aperture of the third lens 3 is L₃, satisfying: F₃ > 5R₃, L₃/R₃ > 1.2.

The rear lens group includes a fourth lens group, a fifth lens group, and a sixth lens group arranged in sequence. The fourth lens group includes a fourth lens 4 and a fifth lens 5. The fourth lens 4 and the fifth lens 5 are cemented to each other to form a cemented lens group, and the center of curvature of the cemented surface between the fourth lens 4 and the fifth lens 5 is located on one side of the stop 9. The fifth lens group includes at least a sixth lens 6, and a surface of the sixth lens 6 away from the stop 9 is a convex surface. The sixth lens group includes a seventh lens 7 and an eighth lens 8.

The projection lens further includes a prism 10 and an image generator 12. The prism 10 and the image generator 12 are sequentially located on a side of the rear lens group away from the stop 9. A protective glass 11 is provided between the prism 10 and the image generator 12.

For the above Embodiment 1, the effective focal length of the projection lens is 20.2mm, the F-number is 2.4, the FOV is 40°, and the thickness of the prism 10 is 20mm.

Table 1 shows the basic optical design parameters of the projection lens, including surface profile, radius of curvature, lens center thickness, air gap, material, and aperture.

**Table 1 basic optical design parameters**

| Number of a surface | Description | Surface profile | Radius of curvature | Thickn ess | Optical material (Nd; Vd) | Semi-apert ure |
|---|---|---|---|---|---|---|
| OBJ | | Spherical surface | Infinity | 150 | | 64.19 |
| S1 | First lens | Spherical surface | 166.007 | 3.50 | 1.74; 28.3 | 13.98 |
| S2 | | Spherical surface | 25.914 | 9.22 | | 12.61 |
| S3 | Second lens | Spherical surface | 40.982 | 6 | 1.90; 37.1 | 12.78 |
| S4 | | Spherical surface | -71.70 | 0.2 | | 12.37 |
| S5 | Third lens | Spherical surface | 10.19 | 6.08 | 1.81; 25.5 | 8.99 |
| S6 | | Spherical surface | 6.21 | 6.96 | | 5.37 |
| STOP | | Spherical surface | Infinity | 1.042 | | 3.21 |
| S8 | Fourth lens | Spherical surface | -161.68 | 2.992 | 1.56; 60.8 | 3.722 |
| S9 | Fifth lens | Spherical surface | -8.98 | 4.038 | 1.81; 25.5 | 4.32 |
| S10 | | Spherical surface | 62.11 | 2.17 | | 6.19 |
| S11 | Sixth lens | Spherical surface | -45.99 | 3.53 | 1.50; 81.5 | 7.42 |
| S12 | | Spherical surface | -15.12 | 0.545 | | 8.40 |
| S13 | Seventh lens | Spherical surface | -349.29 | 4.941 | 1.72; 47.9 | 10.14 |
| S14 | | Spherical surface | -17.59 | 0.20 | | 10.63 |
| S15 | Eighth lens | Spherical surface | 33.98 | 3.29 | 1.62; 60.4 | 10.86 |
| S16 | | Spherical surface | Infinity | 5 | | 10.71 |
| S17 | Prism | Spherical surface | Infinity | 20 | 1.64; 55.4 | 9.85 |
| S18 | | Spherical surface | Infinity | 1.15 | | 7.80 |
| S19 | Protective glass | Spherical surface | Infinity | 1.1 | 1.52; 64.2 | 7.60 |
| S20 | | Spherical surface | Infinity | 0.51 | | 7.48 |
| IMAGE | Image generator | Spherical surface | Infinity | - | | 7.39 |

It should be noted that, in Table 1 above, the two surfaces of the first lens 1 are S1 and S2, which correspond to the first surface 101 and the second surface 102 in FIG. 1, respectively; S3 and S4 correspond to the third surface 201 and the fourth surface 202 of the second lens 2, respectively, and so on, which will not be described in detail herein.

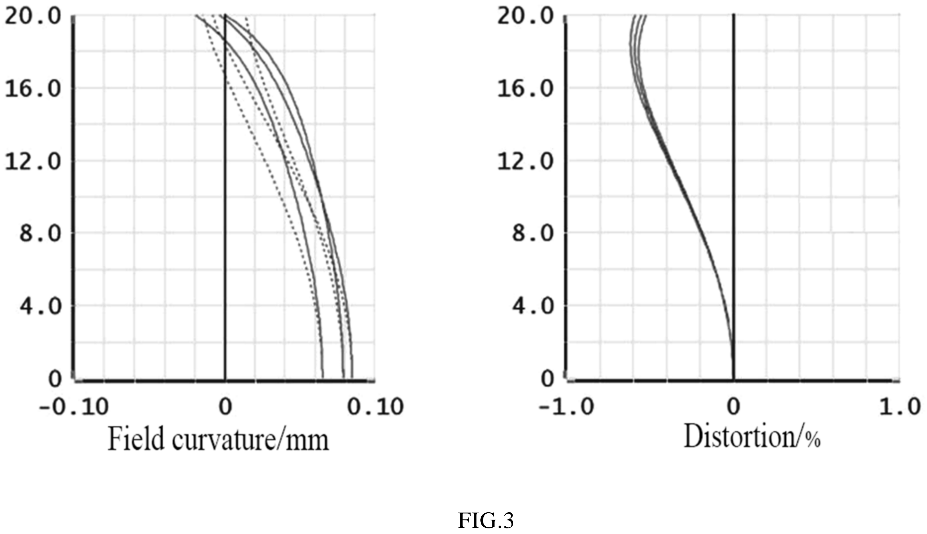

For the projection lens provided in the above Embodiment 1, its optical performance is shown in FIG. 3 to FIG. 7:

The distortion diagram reflects the difference in image plane positions where clear images are formed at different fields of view. Referring to the right view of FIG. 3, the maximum distortion occurs at an 18° field of view, with an absolute value less than 0.6%. The field curvature diagram reflects the difference in image plane positions where clear images are formed at different fields of view, and referring to the left view of FIG. 3, the maximum field curvature occurs near the maximum field of view, with a maximum value less than 0.1mm. It can be seen that the projection lens has small field curvature and distortion, causing good imaging quality.

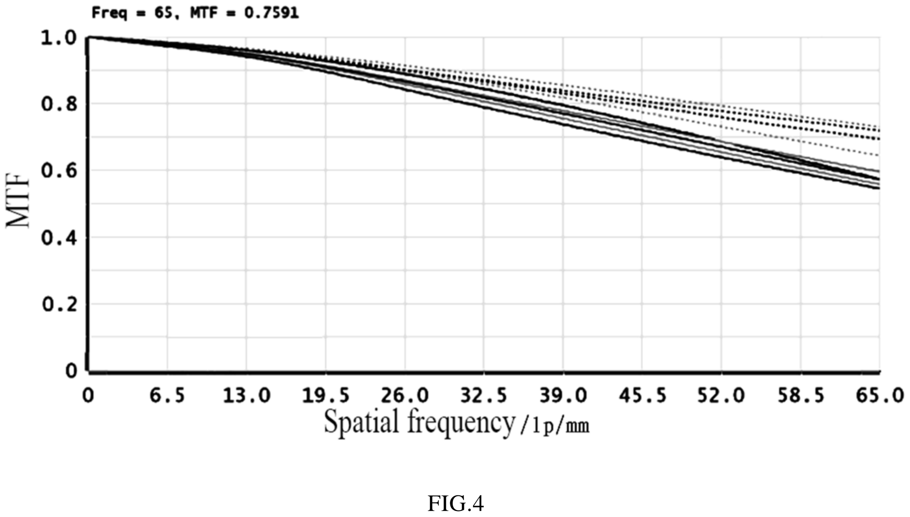

The MTF curve diagram is the modulation transfer function diagram, and the imaging clarity of the near-eye display module is characterized through the contrast of black and white line pairs. Referring to FIG. 4, the MTF of the projection lens is > 0.52 at 67 lp/mm, indicating clear imaging.

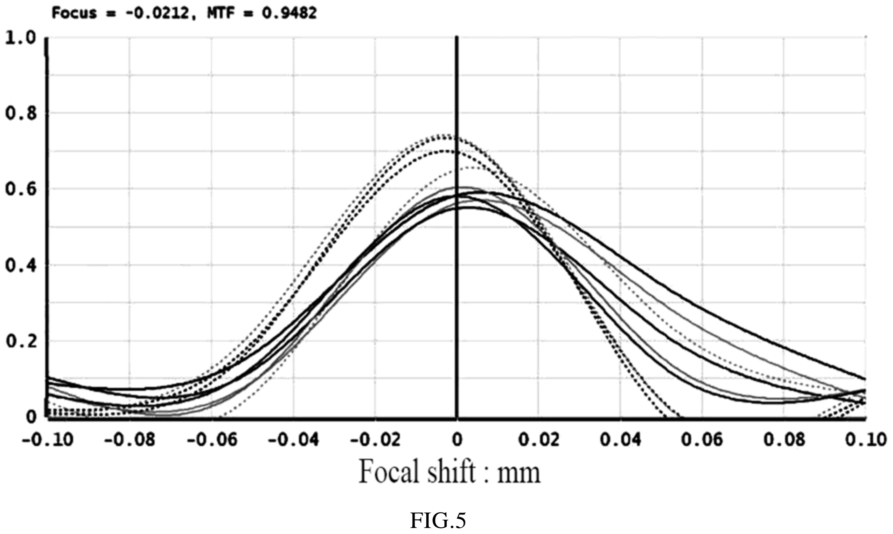

To balance the clarity of the image plane, defocus processing is done for small fields of view. Referring to FIG. 5, it can be seen from the defocus MTF diagram: with a defocus of ±0.02, the image quality does not decrease significantly, meaning the projection lens has low sensitivity to the position of the image plane.

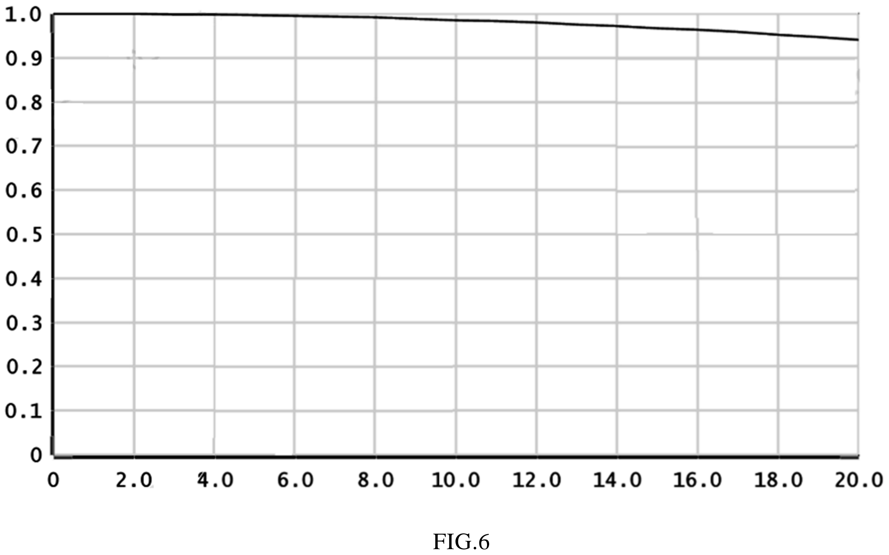

Referring to FIG. 6, FIG. 6 reflects the depth of focus, i.e., the impact on the projected image when the image plane (or the DMD for projection) moves forward or backward along the optical axis. It can be seen from FIG. 6 that the impact is not significant.

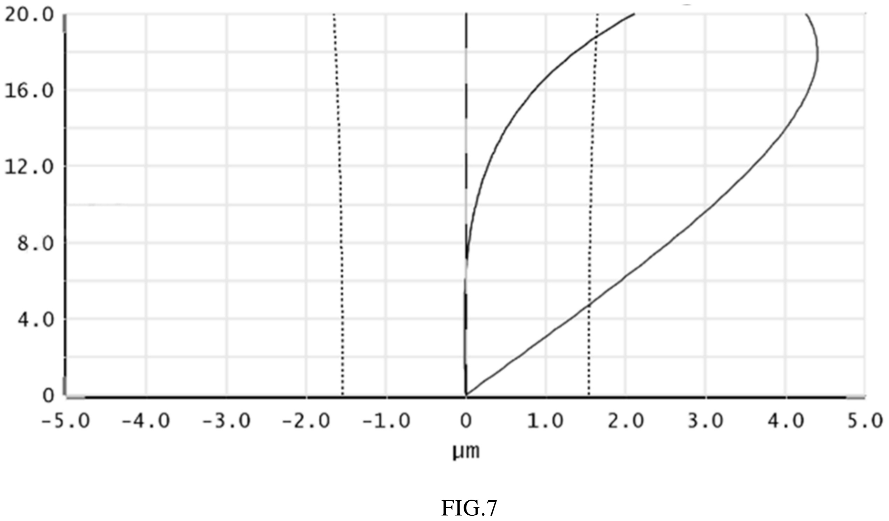

The lateral chromatic aberration is also known as magnification chromatic aberration. Referring to FIG. 7, the maximum chromatic aberration value of the projection lens is less than 4.4µm.

Thus, it can be concluded that the projection lens provided in the above Embodiment 1 has good optical performance.

### Second Embodiment

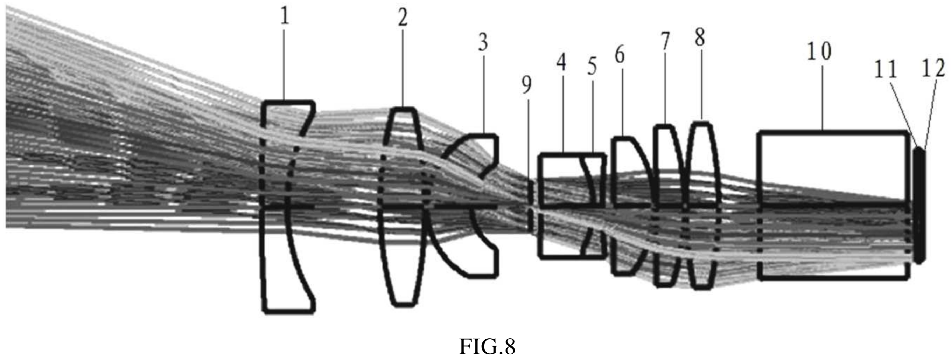

The overall optical architecture of the projection lens in Embodiment 2 is the same as that in Embodiment 1, and its optical architecture and light path diagram can be referred to in FIG. 8. The optical design parameters of the projection lens provided in Embodiment 2 are different from those in Embodiment 1, as shown in Table 2 below.

Table 2 shows the basic optical design parameters of the projection lens in Embodiment 2, including surface profile, radius of curvature, lens center thickness, air gap, material, and aperture.

For Embodiment 2, the effective focal length of the projection lens is 18.41mm, the F-number is 2.4, the FOV is 39.10°, and the thickness of the prism 10 is 16mm.

**Table 2 basic optical design parameters**

| Number of a surface | Description | Surface profile | Radius of curvature | Thickn ess | Optical material ( Nd; Vd) | Semi-ap erture |
|---|---|---|---|---|---|---|
| OBJ | | Spherical surface | Infinity | 130 | | 55.13 |
| S1 | First lens | Spherical surface | 257.811 | 3.487 | 1.76; 26.6 | 12.67 |
| S2 | | Spherical surface | 24.30 | 12.01 | | 11.45 |
| S3 | Second lens | Spherical surface | 45.78 | 6.51 | 1.88; 39.2 | 12.0 |
| S4 | | Spherical surface | -59.37 | 0.2 | | 11.62 |
| S5 | Third lens | Spherical surface | 10.57 | 6.09 | 1.90; 31.4 | 8.98 |
| S6 | | Spherical surface | 6.43 | 7.87 | | 5.45 |
| STOP | | Spherical surface | Infinity | 1.36 | | 3.41 |
| S8 | Fourth lens | Spherical surface | -50.31 | 6.913 | 1.60; 65.5 | 3.92 |
| S9 | Fifth lens | Spherical surface | -11.70 | 1.20 | 1.76; 27.5 | 5.55 |
| S10 | | Spherical surface | 64.11 | 1.45 | | 6.46 |
| S11 | Sixth lens | Spherical surface | 294.75 | 5.61 | 1.50; 81.6 | 7.41 |
| S12 | | Spherical surface | -14.92 | 0.2 | | 8.62 |
| S13 | Seventh lens | Spherical surface | -895.35 | 4.03 | 1.72; 47.9 | 9.54 |
| S14 | | Spherical surface | -30.05 | 0.20 | | 9.97 |
| S15 | Eighth lens | Spherical surface | 59.86 | 4.23 | 1.73; 547 | 10.14 |
| S16 | | Spherical surface | -53.97 | 8 | | 10.07 |
| S17 | Prism | Spherical surface | Infinity | 16 | 1.64; 55.4 | 8.53 |
| S18 | | Spherical surface | Infinity | 1.1 | | 6.87 |
| S19 | Protective glass | Spherical surface | Infinity | 0.7 | 1.52; 64.2 | 6.68 |
| S20 | | Spherical surface | Infinity | 0.51 | | 6.60 |
| IMAGE | Image generator | Spherical surface | Infinity | - | | 6.54 |

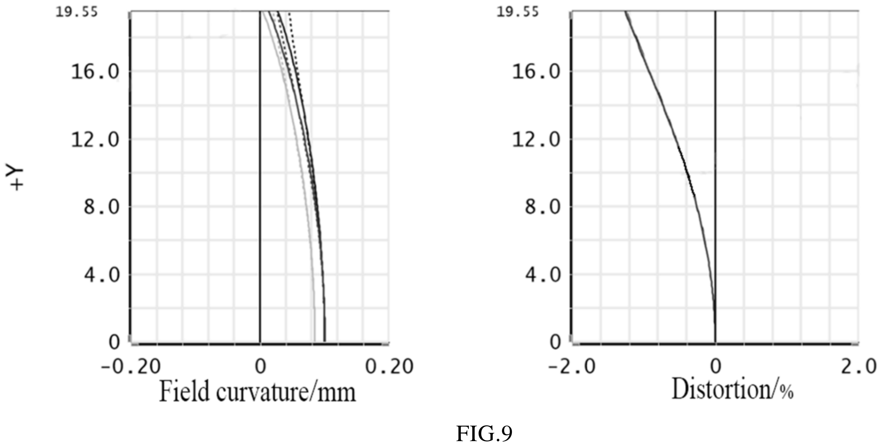

The distortion diagram reflects the difference in the image plane position where a clear image is formed at different fields of view. Referring to the right view of FIG. 9, the maximum distortion occurs at the maximum field of view, with an absolute value less than 1.3%. The field curvature diagram reflects the difference in the image plane position where a clear image is formed at different fields of view, and referring to the left view of FIG. 9, the maximum field curvature occurs near the maximum field of view, with a maximum value less than 0.08mm. It can be seen that the projection lens has small field curvature and distortion, causing good imaging quality.

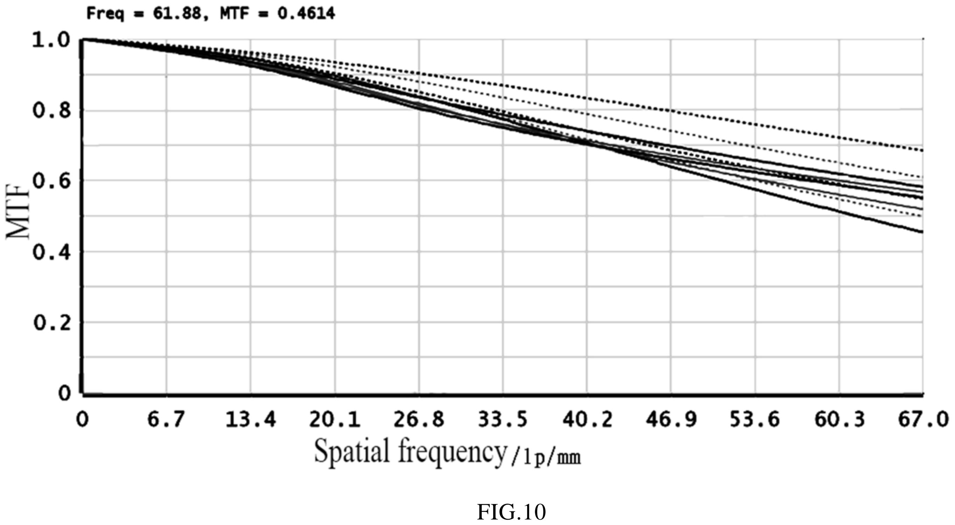

The MTF curve diagram is the modulation transfer function diagram, and the imaging clarity of the near-eye display module is characterized through the contrast of black and white line pairs. Referring to FIG. 10, the MTF is > 0.45 at 67 lp/mm, indicating clear imaging.

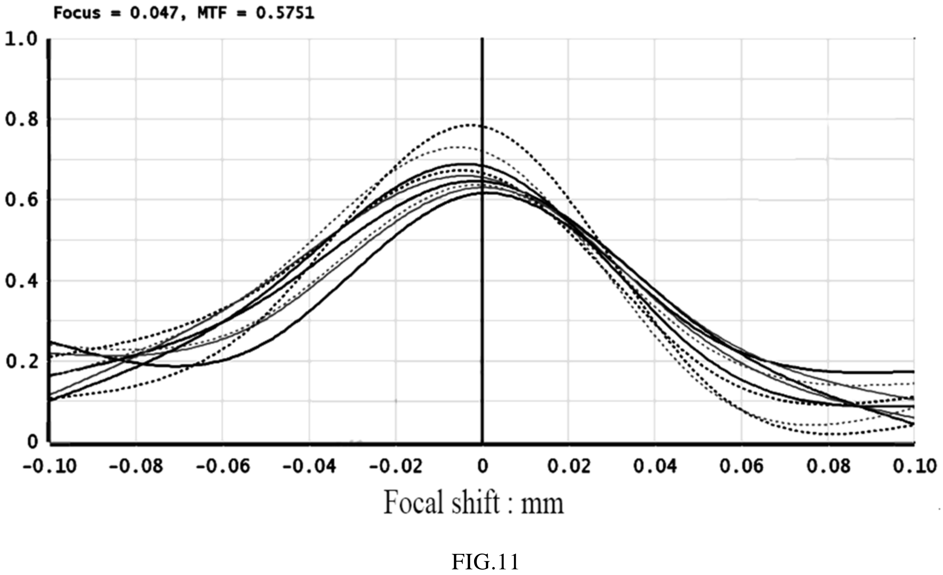

To balance the clarity of the image plane, defocus processing is done for small fields of view. Referring to FIG. 11, it can be seen from the defocus MTF diagram that with a defocus of ±0.02, the MTF does not decrease significantly, meaning the system projection lens has low sensitivity to the position of the image plane.

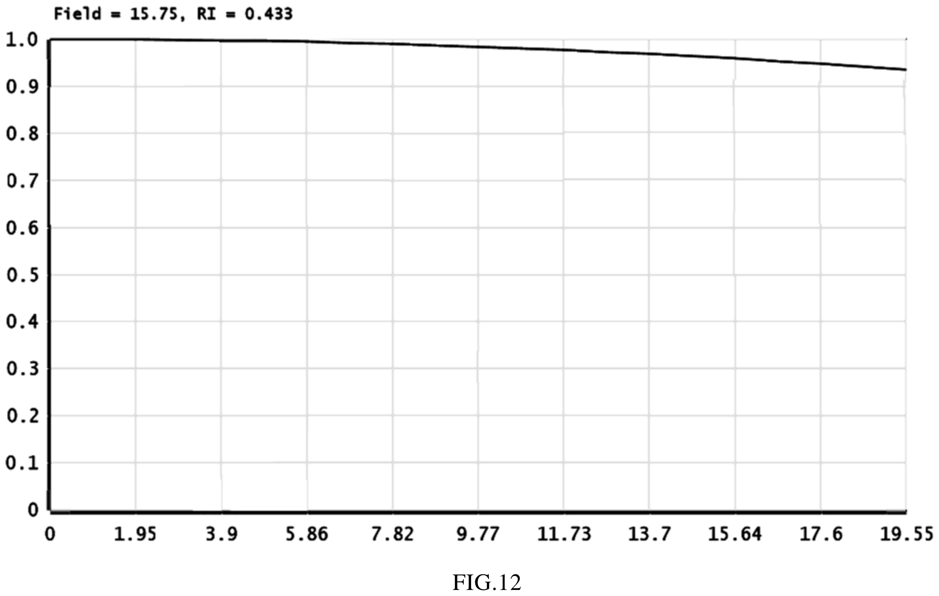

Referring to FIG. 12, FIG. 12 reflects the depth of focus, i.e., the impact on the projected image when the image plane (or the DMD for projection) moves forward or backward along the optical axis. From FIG. 12, it can be seen that the impact is not significant.

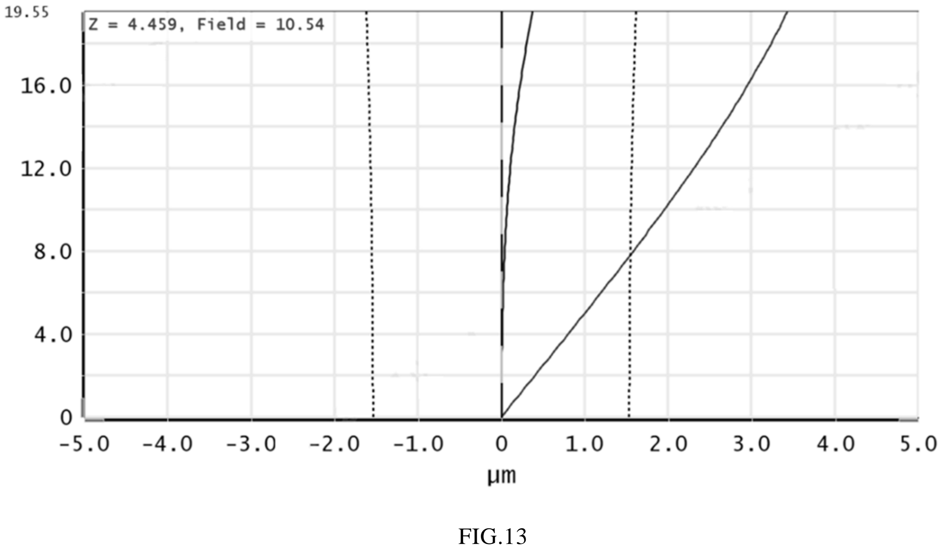

The lateral chromatic aberration is also known as magnification chromatic aberration. Referring to FIG. 13, the maximum chromatic aberration value of the projection lens is less than 3.45µm.

Thus, it can be concluded that the projection lens provided in the Embodiment 2 above has good optical performance.

According to another aspect of the embodiments of the present disclosure, a vehicle-mounted HUD is further provided. The vehicle-mounted HUD includes the projection lens as described above.

According to yet another aspect of the embodiments of the present disclosure, a vehicle is further provided. The vehicle includes the vehicle-mounted HUD as described above.

Here, the vehicle is, for example, various types of vehicles such as an electric vehicle.

Specific implementations of the vehicle-mounted HUD and the vehicle according to the embodiments of the present disclosure may refer to the above-mentioned embodiments of the projection lens, and thus at least have all the beneficial effects brought by the technical solutions of the above-mentioned embodiments. Therefore, they will not be described in detail here.

The preceding embodiments focus on describing the differences between each embodiment. The different optimizing features of each embodiment can be combined to form even more optimal embodiments as long as they do not conflict. For the sake of brevity, these combinations will not be elaborated upon here.

Although specific embodiments of the present disclosure have been described in detail through examples, those skilled in the art should understand that the above examples are for illustrative purposes only and are not intended to limit the scope of the present disclosure. Those skilled in the art should understand that the above embodiments can be modified without departing from the scope and spirit of the present disclosure. The scope of the present disclosure is defined by the appended claims.

## Claims

1. A projection lens, **characterized in that** the projection lens comprises, from an object side toward an image side along the same optical axis, a front lens group, a rear lens group, and a stop (9); wherein the stop (9) is located between the front lens group and the rear lens group;
the front lens group comprises at least a first lens (1) and a second lens (2), and the second lens (2) is located between the first lens (1) and the stop (9);
wherein the first lens (1) has a negative optical power, and light rays exiting the first lens (1) raise their height upon incidence on the second lens (2).

2. The projection lens according to claim 1, **characterized in that** the first lens (1) comprises a first surface (101) and a second surface (102), the second surface (102) is close to the second lens (2), and a ratio of a radius of curvature R₁₂ of the second surface (102) to an air gap A between the first lens (1) and the second lens (2) is: 1.5 < R₁₂/A < 3.3.

3. The projection lens according to claim 1, **characterized in that** the second lens (2) comprises a third surface (201) and a fourth surface (202), a second surface (102) of the first lens (1) and the third surface (201) of the second lens (2) are adjacent and spaced apart; wherein the second surface (102) is a concave surface, and a radius of curvature R₁₂ of the second surface (102) is -20mm to -28mm.

4. The projection lens according to claim 3, **characterized in that** when the second surface (102) of the first lens (1) is a concave surface, an FOV value of the projection lens can be increased by 4° to 8°.

5. The projection lens according to claim 1, **characterized in that** an effective focal length of the projection lens is 17mm to 28mm.

6. The projection lens according to claim 3, **characterized in that** a clear aperture of the third surface (201) is greater than that of the second surface (102).

7. The projection lens according to claim 1, **characterized in that** the front lens group further comprises a third lens (3), and the third lens (3) is located between the second lens (2) and the stop (9); and
the third lens (3) is a meniscus lens, a focal length of the third lens (3) is F₃, a radius of curvature of the third lens (3) is R₃, an aperture of the third lens (3) is L₃, which satisfy: F₃ > 5R₃, L₃/R₃ > 1.2.

8. The projection lens according to claim 7, **characterized in that** the third lens (3) comprises a fifth surface (301) and a sixth surface (302), the fifth surface (301) faces away from the stop (9), and the sixth surface (302) is close to the stop (9); and
wherein the fifth surface (301) is a convex surface, the sixth surface (302) is a concave surface, and the center of curvature of the sixth surface (302) is close to a center of the stop (9).

9. The projection lens according to claim 7, **characterized in that** the front lens group comprises a first lens group, a second lens group, and a third lens group; and
the first lens (1) is located in the first lens group, the second lens (2) is located in the second lens group, and the third lens (3) is located in the third lens group; an effective focal length of the first lens group is -28mm to -45mm, an effective focal length of the second lens group is 25mm to 32mm, and an effective focal length of the third lens group is -50mm to -65mm.

10. The projection lens according to any one of claims 1 to 9, **characterized in that** the rear lens group comprises a fourth lens group, a fifth lens group, and a sixth lens group arranged in sequence; and
an effective focal length of the fourth lens group is -19mm to -35mm, an effective focal length of the fifth lens group is 25mm to 50mm, and an effective focal length of the sixth lens group is 16mm to 30mm.

11. The projection lens according to claim 10, **characterized in that** the fourth lens group comprises a fourth lens (4) and a fifth lens (5), which are cemented to each other to form a cemented lens group, and the center of curvature of a cemented surface between the fourth lens (4) and the fifth lens (5) is located on one side of the stop (9).

12. The projection lens according to claim 10, **characterized in that** the fifth lens group comprises at least a sixth lens (6), and a surface of the sixth lens (6) away from the stop (9) is a convex surface; and
the sixth lens group comprises a seventh lens (7) and an eighth lens (8).

13. The projection lens according to claim 1, **characterized in that** a focal length F_{front} of the front lens group is: F_{front} > 80mm; a focal length Fᵣₑₐᵣ of the rear lens group is: 12mm ≤ Fᵣₑₐᵣ ≤ 18mm.

14. The projection lens according to claim 1, **characterized in that** the projection lens further comprises a prism (10) and an image generator (12), which are sequentially located on a side of the rear lens group away from the stop (9), with a protective glass (11) provided between the prism (10) and the image generator (12).

15. A vehicle-mounted HUD, **characterized by** comprising the projection lens according to any one of claims 1 to 14.

16. A vehicle, **characterized by** comprising the vehicle-mounted HUD according to claim 15.
